**Europäisches Patentamt**

**European Patent Office**

**Office européen des brevets**

(19)

(11) Numéro de publication: **0 027 842**
**A1**

(12)

# DEMANDE DE BREVET EUROPEEN

(21) Numéro de dépôt: **79870023.3**

(51) Int. Cl.³: **B 60 J 3/02**

(22) Date de dépôt: **17.10.79**

(43) Date de publication de la demande: **06.05.81**
**Bulletin 81/18**

(71) Demandeur: **Callerame, Salvatore, rue Basse Cour, no. 16, B-4300 Ans (BE)**

(84) Etats contractants désignés: **BE DE FR IT NL**

(72) Inventeur: **Callerame, Salvatore, rue Basse Cour, no. 16, B-4300 Ans (BE)**

(54) **Glace protectrice pour véhicules contre l'éblouissement du soleil, des phares de voitures, de quelque lumière intense ou encore contre la chaleur directe du soleil à travers la fenêtre latérale.**

(57) Glace colorée protectrice fixée de façon pivotante sur le pare-soleil avec des pinces de serrage.

- 1 -

Glasse protectrice pour véhicules contre l'éblouissement
solaire, des phares des voitures, de quelque lumière intense ou encore de la chaleur directe du soleil à travers de
la fenêtre latérale.

L'invention concerne une glasse protectrice pour une vue
claire de la route malgré l'éblouissement solaire, des
phares des voitures venant en sens inverse, de quelque
lumière intense ou encore de la chaleur directe du soleil
à travers de la fenêtre latérale. L'emplacement de la glasse sera sur le pare-soleil du véhicule à l'aide de pinces
de serrage.

Cette glasse protectrice contre l'éblouissement sera
présentée sous forme de matière plastique transparente de
couleurs fumées ou non fumées tels que: bleu - vert - gris -
brun foncé - ombre et de matières plastiques telles que:
plexiglas - plexidur - feuille perpex d'acrylique -
shinkolite feuilles coulées en méthacrylate de méthyl -
makrolon ou en tout autre matière plastique. La glasse sera
sous forme rectangulaire avec ces quatres angles abattus et
de deux attaches fixes à axe cylindrique faisant partie
intégrale à la glasse et placées horizontalement à celle-ci.
Ces deux attaches fixes servent à recevoir les deux demi-
pinces en face à face de matières plastiques telles que:

*aus a, 17-10-1979*
*Bellerance Salvatore*

makrolon - shinkolite feuilles coulées en méthacrylate de méthyl ou en tout autre matière plastique mais de couleur noir opaque. Les deux demi-pinces formeraient une pince dont la fixation avec la glasse se fera à l'aide d'une bague de serrage de matière plastique telle que nylon par exemple, qui viendra s'emboîter sur les attaches fixes à axe cylindrique et les deux paires de demi-pinces.

On peut facilement faire pivoter la glasse (les pinces) suivant le mode d'utilisations si l'éblouissement est trop haut ou trop bas tout en ayant la glasse toujours fixe sur le pare-soleil du véhicule. Cette fixation se fera à l'aide d'un trou foré de part en part dans la pince où viendra se placer un boulon de serrage de Ø 3,5 x 14,4 mm agissant sur les deux demi-pinces. Afin d'avoir un meilleur serrage d'où pressage avec le pare-soleil du véhicule les pinces seront munies d'arêtes.

Dans les véhicules beaucoup de conducteurs connaissent le phénomène bien connu de l'éblouissement. Certains sujets subissent une altération très prolongée de leur sensibilité visuelle, souvent de plusieurs minutes après avoir été éblouis. Le temps de récupération à l'éblouissement peut-être assez long. C'est ce trop long "trou noir" qu'un obstacle ou un tournant peut survenir et ce peut-être l'accident. Cette glasse est auto-réglable par simple manipulation de deux doigts suivant la position de l'éblouissement tel que solaire par exemple: si le soleil est trop haut on peut mettre la glasse sur une longue inclinaison vers le pare-brise, soulageant vos yeux de l'éblouissement ou alors si on roule vers le couché du soleil relever légèrement. Dans le cas ou la glasse est placée sur le côté latéral de la fenêtre, cela fournit une ombre fraîche à la hauteur de l'épaule, n'accorde pas une gêne de la vue et réduit la chaleur et l'éblouissement à l'intérieur

*Aus le 12-10-1979*

*Tellerain Salvatore*

0027842

- 3 -

du véhicule.

Les avantages obtenus grâce à cette invention consistent essentiellement à une meilleur clarté de la route malgré l'éblouissement cela implique donc beaucoup moins de fatigue, sûrement de nombreuses vies pourraient êtres sauvées car la visibilité sera parfaite plutôt qu'en relief. De plus les sujets ne subiront plus une altération très prolongée de la sensibilité visuelle après l'éblouissement. Néanmoins, cette glasse peut-être utilisée également par le passager afin de ne pas être aveuglé ou gêné par les éblouissements.

Dans ce qui suit, l'invention est exposée plus en détail à l'aide de dessins représentant un mode d'exécution.

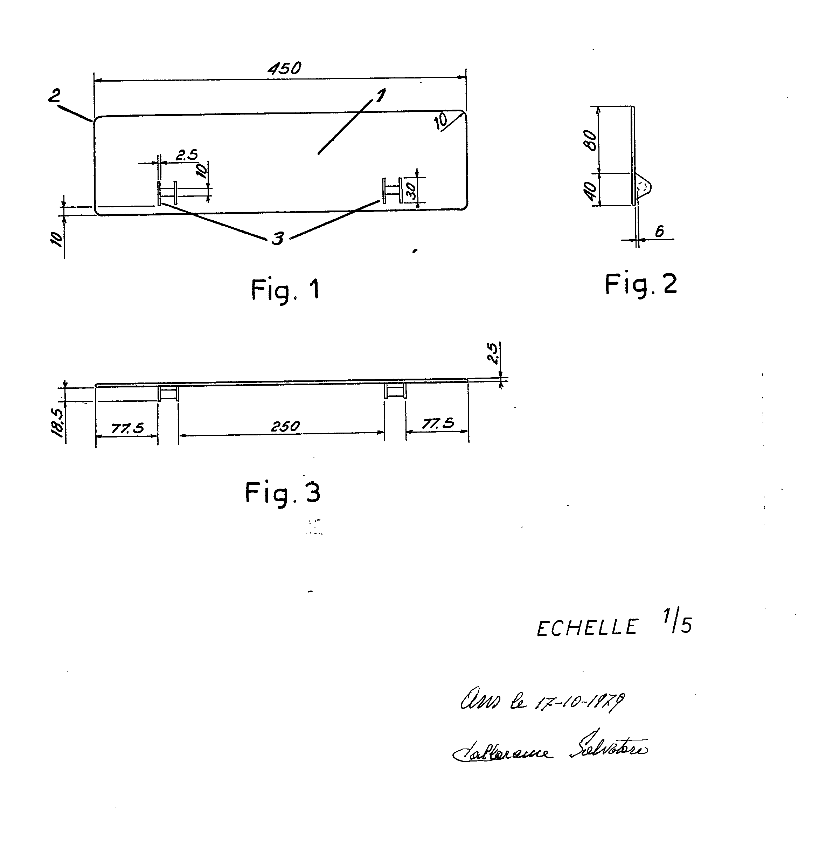

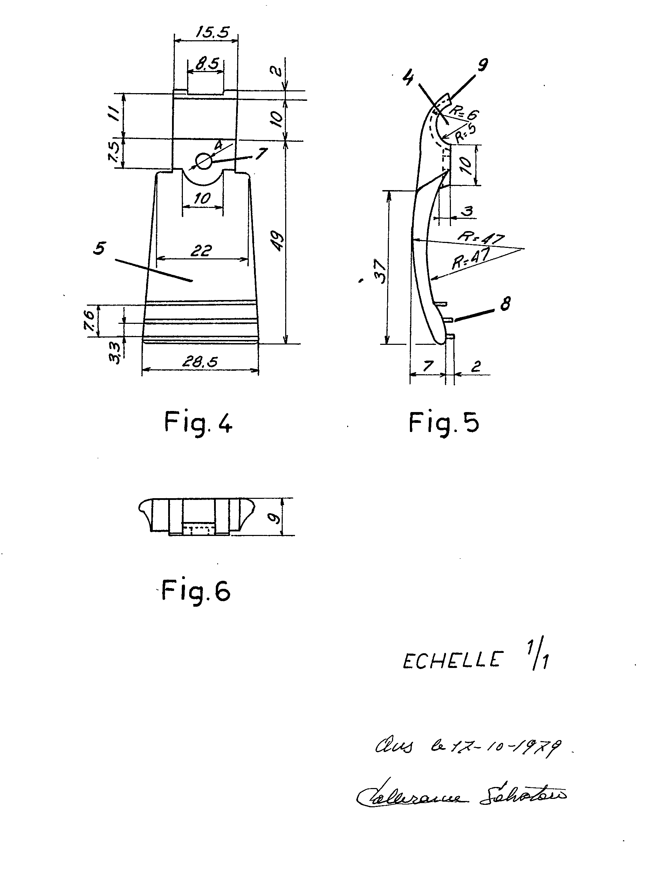

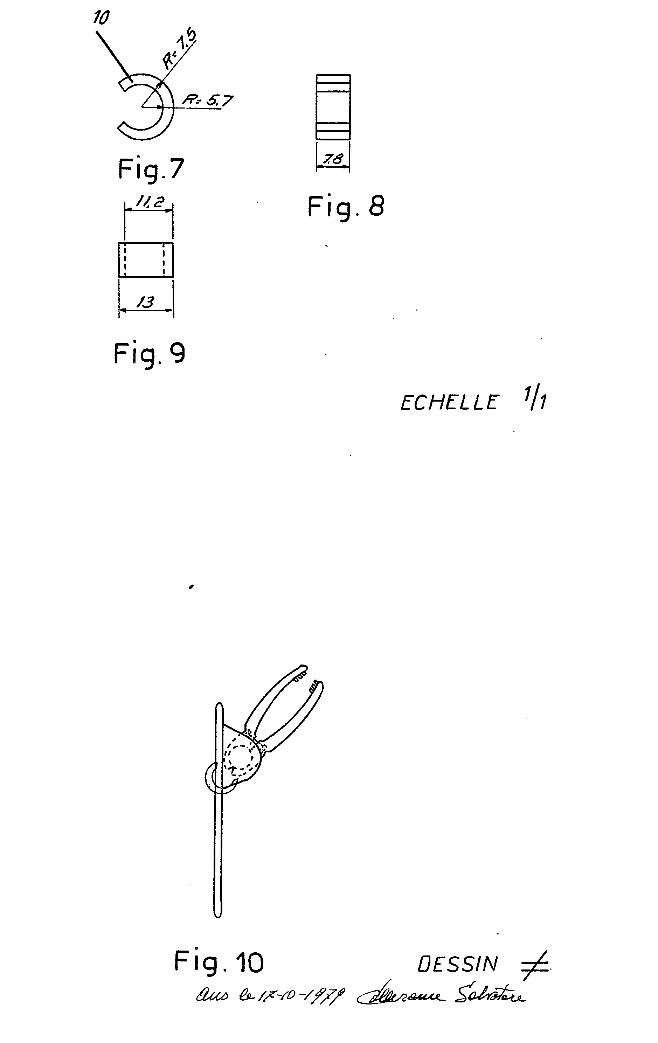

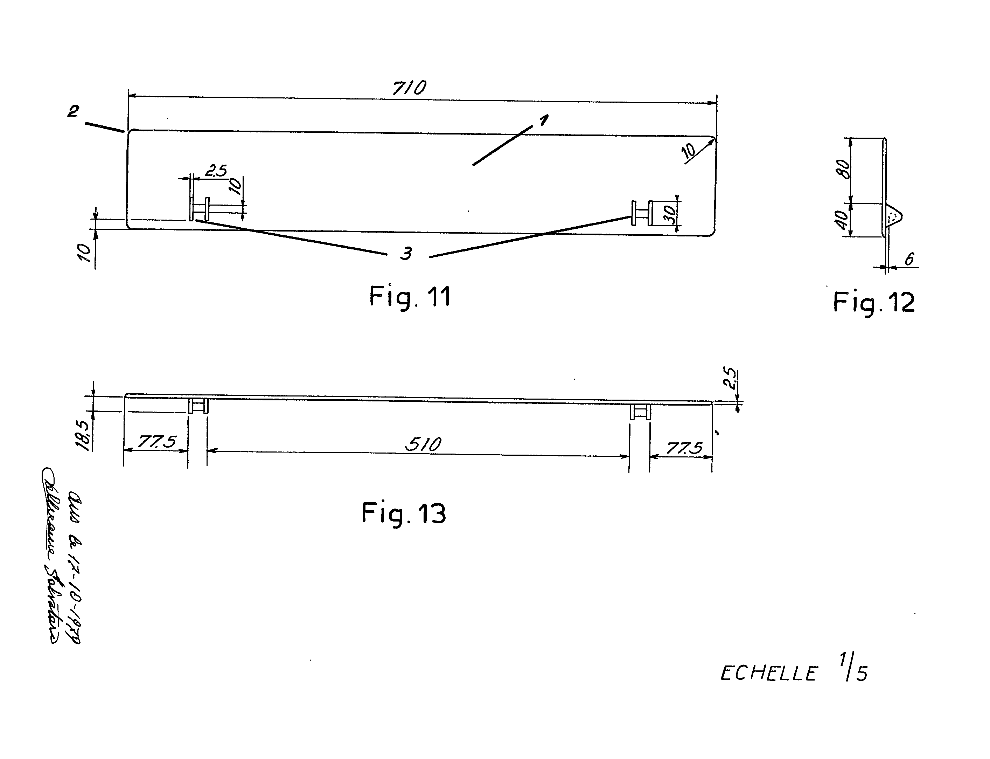

La page 1/5 représente à l'échelle 1/5 la figure 1 en vue de face, la glasse réalisée conformément à la présente invention, dans laquelle les pinces ont été retirées; les figures 2 et 3 représentent la vue de gauche et la vue de dessus.
La page 2/5 représente à l'échelle 1/1 la figure 4 en vue de face c-à-d une demi-pince; les figures 5 et 6 représentent la vue de gauche et la vue de dessus.
La page 3/5 représente tout d'abord à l'échelle 1/1 la figure 7 en vue de face c-à-d une bague de serrage; les figures 8 et 9 représentent la vue de gauche et la vue de dessus; ensuite à une échelle réduite non déterminée la figure 10 qui représente la vue de côté de l'invention proprement déposée avec la glasse, la pince et la bague.
La page 4/5 représente les mêmes figures que celles de la page 1/5 à l'échelle 1/5 mais seulement à un

- 4 -

modèle un peu plus grand qui sera utilisé par les gros véhicules. Toute la fabrication reste la même exceptée la longueur et la largeur de la glasse.

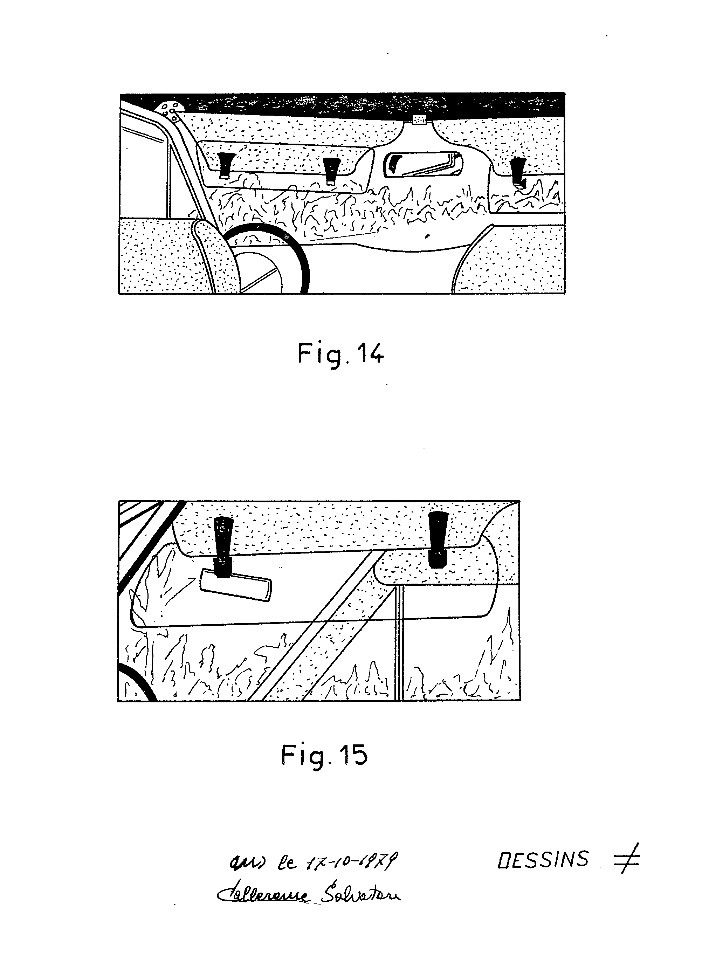

La page 5/5 représente à une échelle réduite non déterminée les figures 14 et 15 représentant les différents montages de la glasse sur le pare-soleil du véhicule avec des exemples d'utilisations.

Les figures représentent une glasse protectrice pour véhicules contre l'éblouissement solaire, des phares des voitures, de quelque lumière intense ou encore de la chaleur directe du soleil à travers de la fenêtre latérale.
Sa constitution de base comprend une glasse transparente 1 de couleur avec ces quatres angles 2 abattus et de deux attaches fixes 3 à axe cylindrique placées horizontalement à la glasse destinées à recevoir l'axe de rotation 4 de la demi-pince 5 d'où les deux demi-pinces en face à face formeront une pince en rotation sur l'axe cylindrique 3.
La fixation et la rotation des demi-pinces 5 autour des attaches à axe cylindrique 3 de la glasse 1 se feront à l'aide de la bague de serrage 10. L'ouverture et la fermeture des pinces se feront à l'aide d'un trou 7 de la pince dans lequel sera placé un boulon agissant simultanément sur les deux demi-pinces 5. Par contre, les deux demi-pinces 5 auront l'ouverture maximale lorsque les chanfreins 9 seront l'un contre l'autre. Pour un meilleur serrage et pressage de fixation sur le pare-soleil du véhicules, les demi-pinces 5 seront munies d'arêtes 8 .

Aus le 17-10-1979
Delleraum Salvator

- 5 -

Revendication
----------

Glasse protectrice pour véhicules contre l'éblouissement
solaire, des phares des voitures, de quelque lumière
intense ou encore de la chaleur directe du soleil à travers
de la fenêtre latérale, constituée d'une glasse (1) transparente de couleur et de deux attaches fixes (3) à axe
cylindrique placées horizontalement à la glasse et destinées à recevoir l'axe de rotation (4) de chacunes des demi-
pinces (5) pour former une pince de serrage en rotation
sur cet axe, la fixation et la rotation des demi-pinces (5)
autour des attaches (3) seront effectuées à l'aide d'une
bague de serrage (10), l'opération d'ouverture et de fermeture des pinces seront manoeuvrées à l'aide d'un trou (7)
foré de part en part dans chacunes des demi-pinces (5)
dans lequel sera placé un boulon qui agira simultanément
sur les deux demi-pinces, par contre l'ouverture maximale
des pinces sera opérée à l'aide du chanfrein (9) de chacunes des demi-pinces (5), pour pouvoir assurer un meilleur
serrage et pressage des demi-pinces (5) sur lè pare-soleil
du véhicule , elles seront munies d'arêtes (8).

Gllo le 17-10-1979
Celleraune Salvator

Fig. 1

Fig. 2

Fig. 3

ECHELLE $^1/_5$

Ans le 17-10-1979

Salleraine Salvatore

**Fig. 4**

**Fig. 5**

**Fig. 6**

ECHELLE 1/1

Aus le 17-10-1979.

10

R = 7,5

R = 5,7

Fig. 7

7,8

Fig. 8

11,2

13

Fig. 9

ECHELLE 1/1

Fig. 10                    DESSIN ≠

aus le 17-10-1979 Llarance Salvatore

710

2

1

10

2.5

10

30

10

**Fig. 11**

80

40

6

**Fig. 12**

2.5

18.5

77.5

510

77.5

**Fig. 13**

ECHELLE ¹/₅

0027842

Fig. 14

Fig. 15

an) le 17-10-1979
Tallerame Salvatore

DESSINS ≠

**Office européen**

**des brevets**

**RAPPORT DE RECHERCHE EUROPEENNE**

0027842

Numéro de la demande

EP 79 87 0023

## DOCUMENTS CONSIDERES COMME PERTINENTS

| Catégorie | Citation du document avec indication, en cas de besoin, des parties pertinentes | Revendica-tion concernée | CLASSEMENT DE LA DEMANDE (Int. Cl.) |
|---|---|---|---|
| | FR - A1 - 2 310 894 (G. DERUELLE) <br> * page 3, lignes 21 à 22; fig. 2, 3 * <br> -- | 1 | B 60 J 3/02 |
| | FR - A - 2 116 318 (R. MEILLER) <br> * totalité du document * <br> -- | 1 | |
| | FR - A - 1 499 699 (L. MASI) <br> * fig. 1, 6 * <br> -- | 1 | |
| | US - A - 4 130 317 (W. LAI) <br> * totalité du document * <br> -- | 1 | **DOMAINES TECHNIQUES RECHERCHES (Int. Cl.)** |
| | US - A - 2 829 919 (C.H. BARTLETT) <br> * totalité du document * <br> ---- | 1 | B 60 J 3/00 |

**CATEGORIE DES DOCUMENTS CITES**

X: particulièrement pertinent

A: arrière-plan technologique

O: divulgation non-écrite

P: document intercalaire

T: théorie ou principe à la base de l'invention

E: demande faisant interférence

D: document cité dans la demande

L: document cité pour d'autres raisons

&: membre de la même famille, document correspondant

Le présent rapport de recherche a été établi pour toutes les revendications

| Lieu de la recherche | Date d'achèvement de la recherche | Examinateur |
|---|---|---|
| Berlin | 06-05-1980 | BECKER |

OEB Form 1503.1   06.78